# EUROPEAN PATENT APPLICATION

(11) **EP 4 793 067 A1**
(43) Date of publication of application: **19.08.2026**
(21) Application number: 24877064.6
(22) Date of filing: 01.10.2024
(51) Int. Cl.: B60C 15/00, B60C 9/08

(54) **PNEUMATIC TIRE**

(30) Priority: 12.10.2023 JP 2023177014
(71) Applicant: BRIDGESTONE CORPORATION, Chuo-ku Tokyo 104-8340 (JP)
(72) Inventor: MATSUKI, Kosuke, Tokyo 104-8340 (JP)
(74) Representative: Marks & Clerk LLP
(86) International application number: PCT/JP2024/035145
(87) International publication number: WO 2025/079466

(57) **Abstract**

A maximum value of curvature of a carcass turn-up portion in a tire radial region from a position separated by a distance of 2.0 × H_{f} to a position separated by a distance of 3.0 × H_{f} from a baseline of an applicable rim toward the tire radial outside is 0.003 (1/mm) or less.

## Description

### TECHNICAL FIELD

The present disclosure relates to a pneumatic tire, and more particularly, to a heavy-duty tire. The present disclosure relates, for example, to a large-sized tire (OR (Off the Road) tire) such as a construction vehicle tire.

### BACKGROUND

Large-sized tires such as construction vehicle tires generally have a tire structure comprising a carcass main body portion formed of a carcass ply in which a plurality of carcass cords, extending in a toroidal manner between a pair of bead cores, are rubber-coated, and a carcass turn-up portion formed of the carcass ply, which is turned up from the carcass main body portion around each bead core from the inside to the outside of the tire and extends to the tire radial outside.

This type of tire is often used under severe conditions, such as running over rough terrain with significant irregularities, including protrusions or rocks, while bearing large loads. Therefore, it is known to improve the durability of the bead portion so that the tire can withstand use even in such harsh environments.

However, when a large load is applied and the tire deflects, compressive strain occurs in the carcass turn-up portion, which contributes to improving the durability of the bead portion. In particular, under severe conditions, if this compressive strain repeatedly occurs in the carcass turn-up portion, fatigue fracture may occur.

Such fatigue fracture of the carcass turn-up portion significantly reduces the life of the tire. Therefore, suppressing fatigue fracture of the carcass turn-up portion is one of the challenges required for this type of tire.

The occurrence of buckling of the carcass cord, which causes fatigue fracture of the carcass turn-up portion, is considered to be due, in part, to compressive strain on the compression side of the carcass turn-up portion during bending deformation, in which the substantially carcass main body serves as the neutral axis of bending, when the bead portion collapses. Therefore, as a generally known representative method for reducing compressive strain, it is common to bring the carcass turn-up portion as close as possible to the carcass main body portion in order to suppress compressive strain in the carcass turn-up portion.

Furthermore, this method is also effective in suppressing shear strain of the rubber between the outer surface of the bead portion and the carcass turn-up portion, which occurs due to deformation of the carcass turn-up portion at the contact portion between the rim flange of the applicable rim and the bead portion, and is also effective in suppressing rubber separation occurring along the carcass turn-up portion.

However, merely bringing the carcass turn-up portion and the carcass main body portion closer together promotes shear strain of the rubber between the carcass turn-up portion and the carcass main body portion, resulting in early occurrence of rubber separation between the carcass turn-up portion and the carcass main body portion during the service life of the tire.

Furthermore, even if compressive strain is suppressed by bringing the carcass turn-up portion and the carcass main body portion closer together, in the portion on the tire radial outside from the position where compressive strain is suppressed, bringing the carcass turn-up portion closer to the carcass main body portion conversely reduces the bending rigidity of the carcass turn-up portion.

That is, although bringing the carcass turn-up portion closer to the carcass main body portion is known as an effective measure to suppress compressive strain in the carcass turn-up portion, on the other hand, it promotes shear strain of the rubber between the carcass turn-up portion and the carcass main body portion, and the bending rigidity of the carcass turn-up portion is reduced, which becomes a problem.

Therefore, a technique has been proposed in which the carcass shape is configured such that the cord-to-cord distance between the carcass main body portion and the carcass turn-up portion gradually decreases from the bead core toward the tire radial outside to once reach a minimum value, then gradually increases to once reach a maximum value, and further gradually decreases to reach a minimum value at the end of the carcass turn-up portion. By adjusting the heights from the rim baseline of the applicable rim to the points of the carcass main body portion where the minimum value and maximum value occur, and the height of the rim flange, when the tire is mounted on the applicable rim, it is possible to suppress shear strain of the rubber between the carcass turn-up portion and the carcass main body portion, and also suppress reduction in the bending rigidity of the carcass turn-up portion, thereby reducing compressive strain in the carcass turn-up portion.

Furthermore, Patent Literature (PTL) 1 proposes a method for further reducing compressive strain generated in the carcass turn-up portion by regulating the ratio b/a of the maximum value b and the minimum value a of the cord-to-cord distance between the carcass main body portion and the carcass turn-up portion to a predetermined range.

### CITATION LIST

### Patent Literature

PTL 1: JP 2009-113715 A

### SUMMARY

### (Technical Problem)

However, with the above methods, it is not always possible to sufficiently reduce fatigue fracture due to buckling of the carcass turn-up portion, and there remains room for improvement in the durability of the bead portion.

Therefore, an object of the present disclosure is to provide a pneumatic tire in which fatigue fracture of the carcass turn-up portion is suppressed by suppressing buckling of the carcass turn-up portion, thereby improving the durability of the bead portion.

### (Solution to Problem)

The gist of the present disclosure is as follows.
(1) A pneumatic tire having a carcass as a framework, the carcass comprising: a carcass main body portion formed of a carcass ply in which a plurality of carcass cords, extending in a toroidal manner between a pair of bead cores, are rubber-coated; and a carcass turn-up portion formed of the carcass ply, which is turned up from the carcass main body portion around each bead core from the inside to the outside of the tire and extends to the tire radial outside,
   wherein, in a cross-sectional view in the tire width direction when the pneumatic tire is mounted on an applicable rim,
   a cord-to-cord distance between the carcass main body portion and the carcass turn-up portion gradually decreases from the bead core toward the tire radial outside to once reach a minimum value, then gradually increases to reach a maximum value,
   and tire radial heights H_{A} and H_{B}, measured from a baseline of the applicable rim to points of the carcass main body portion where the minimum value and the maximum value occur, and a flange height H_{f} of the applicable rim,
   satisfy the following: $1.26 \times {H}_{f} \leq {H}_{A} \leq 2.14 \times {H}_{f} ,$ and $2.43 \times {H}_{f} \leq {H}_{B} \leq 3.75 \times {H}_{f} ,$
   and a ratio b/a of a maximum value b of the cord-to-cord distance to a minimum value a of the cord-to-cord distance is greater than 1.00,
   and a maximum value of curvature of the carcass turn-up portion in a tire radial region from a position separated by a distance of 2.0 × H_{f} to a position separated by a distance of 3.0 × H_{f} from the baseline toward the tire radial outside is 0.003 (1/mm) or less,
   wherein "curvature" refers to, in a cross-sectional view in the tire width direction when the pneumatic tire is mounted on the applicable rim, obtaining the coordinates of the carcass turn-up portion every 20 mm along the periphery, and, for a target position, the curvature at that position is defined as the curvature of a circle passing through three points: the target point and two points adjacent to the target point on either side.

Further, "applicable rim" refers to an industrial standard valid in the region where the tire is produced and used, such as the JATMA YEAR BOOK of the Japan Automobile Tyre Manufacturers Association (JATMA) in Japan, the STANDARDS MANUAL of the European Tyre and Rim Technical Organization (ETRTO) in Europe, or the YEAR BOOK of The Tire and Rim Association, Inc. (TRA) in the United States, or those that will be described in the future, and refers to the approved rim (Measuring Rim in the ETRTO STANDARDS MANUAL, Design Rim in the TRA YEAR BOOK) for the applicable size. In the case of a size not described in the above industrial standards, it refers to a rim having a width corresponding to the bead width of the tire. "Applicable rim" includes, in addition to current sizes, sizes that may be included in the above industrial standards in the future. As an example of "sizes to be described in the future," sizes described as "FUTURE DEVELOPMENTS" in the 2013 edition of the ETRTO STANDARDS MANUAL can be cited.

(2) A pneumatic tire having a carcass as a framework, the carcass comprising: a carcass main body portion formed of a carcass ply in which a plurality of carcass cords, extending in a toroidal manner between a pair of bead cores, are rubber-coated; and a carcass turn-up portion formed of the carcass ply, which is turned up from the carcass main body portion around each bead core from the inside to the outside of the tire and extends to the tire radial outside,
wherein, in a cross-sectional view in the tire width direction when the pneumatic tire is mounted on an applicable rim,
when a flange height of the applicable rim is H_{f},
a cord-to-cord distance between the carcass main body portion and the carcass turn-up portion in a tire radial region from a position separated by a distance of 2.0 × H_{f} to a position separated by a distance of 3.0 × H_{f} from the baseline of the applicable rim toward the tire radial outside is at least 0.25 times a maximum diameter of the bead core in a cross-section in the tire width direction,
and a maximum value of curvature of the carcass turn-up portion in the tire radial region is 0.003 (1/mm) or less.

### (Advantageous Effect)

According to the present disclosure, it is possible to provide a pneumatic tire in which fatigue fracture of the carcass turn-up portion is suppressed by suppressing buckling of the carcass turn-up portion, thereby improving the durability of the bead portion.

### BRIEF DESCRIPTION OF THE DRAWINGS

In the accompanying drawings:
FIG. 1 is a cross-sectional view in the tire width direction of a pneumatic tire according to one embodiment of the present disclosure;
FIG. 2A is a diagram illustrating a region where compressive force and tensile force are generated;
FIG. 2B is a diagram depicting displacement of compressive strain and tensile strain;
FIG. 3 is a diagram indicating changes in displacement of compressive strain and tensile strain;
FIG. 4 is a diagram illustrating a cross-section in the width direction of a part of the bead portion and sidewall portion of a pneumatic tire according to one embodiment of the present disclosure;
FIG. 5A is a diagram presenting the distribution of curvature in the tire radial direction of the carcass turn-up portion; and
FIG. 5B is a diagram presenting the distribution of compressive strain in the tire radial direction of the carcass turn-up portion.

Hereinafter, embodiments of the present disclosure will be illustratively described in detail with reference to the drawings.

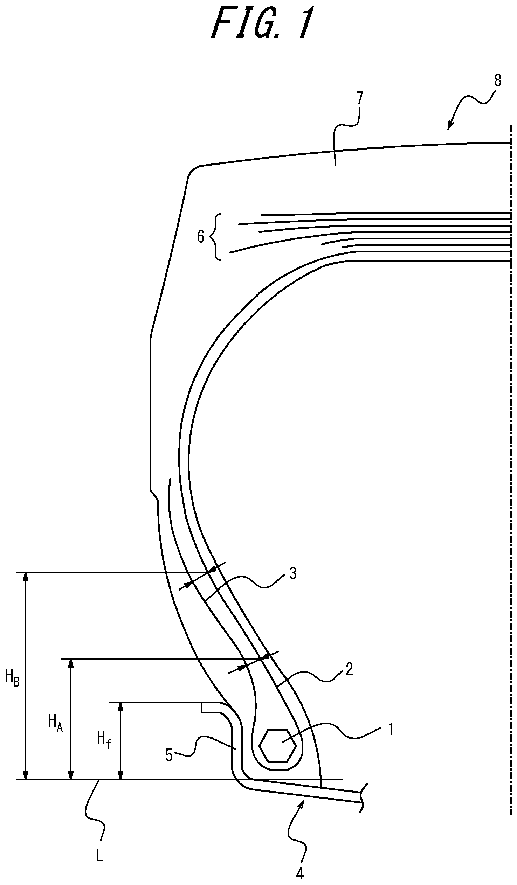

FIG. 1 is a cross-sectional view in the tire width direction of a pneumatic tire according to one embodiment of the present disclosure. FIG. 1 is a cross-sectional view in the tire width direction of a pneumatic tire 8 (hereinafter also simply referred to as "the tire") when mounted on an applicable rim. In FIG. 1, only one half portion in the tire width direction, divided by the tire equatorial plane, is depicted, but the other half portion has the same configuration. Preferably, the pneumatic tire 8 is a heavy-duty tire, and in this example, it is a large-sized tire (an OR (Off the Road) tire) such as a construction vehicle tire.

As illustrated in FIG. 1, the tire 8 is provided with a bead core 1 embedded in each of a pair of bead portions. The tire 8 has, as its framework, a carcass composed of one or more carcass plies, each comprising a carcass main body portion 2 formed of a carcass ply in which a plurality of carcass cords, extending in a toroidal manner between the pair of bead cores 1, are rubber-coated, and a carcass turn-up portion 3 formed of the carcass ply, which is turned up from the carcass main body portion 2 around each bead core 1 from the inside to the outside of the tire and extends to the tire radial outside. The carcass cord may be, for example, a steel cord.

On the tire radial outside of the carcass main body portion 2, a belt 6 is disposed, and further on the tire radial outside of the belt 6, a tread portion 7 is provided. In FIG. 1, the tire 8 is mounted on an applicable rim 4, and in FIG. 1, a rim flange 5 and a baseline L (hereinafter referred to as the rim baseline) of the applicable rim 4, which extends parallel to the rotation axis of the tire 8 through the tire equatorial plane, are depicted.

As illustrated in FIG. 1, the cord-to-cord distance between the carcass main body portion 2 and the carcass turn-up portion 3 gradually decreases from the vicinity of the bead core 1 toward the tire radial outside to reach a minimum value, and then gradually increases toward the tire radial outside to reach a maximum value.

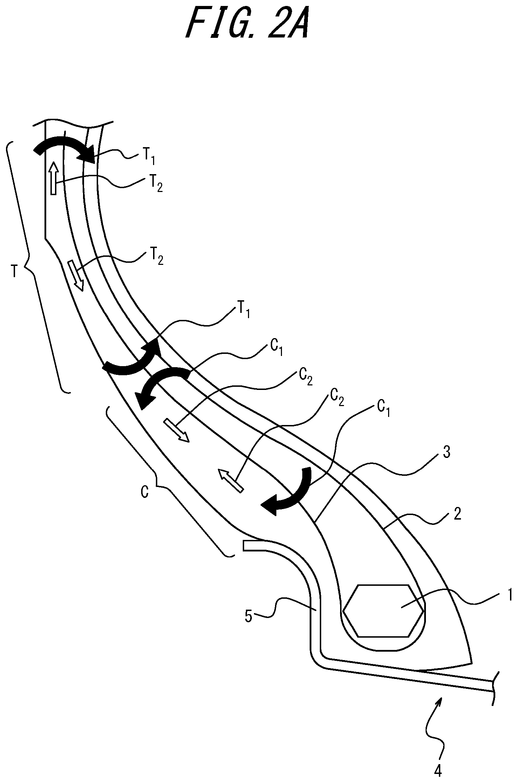

Here, when a load is applied to the tire, the tire deflects, and bending deformation occurs in part of the bead portion and the sidewall portion, with the carcass main body portion 2 serving as the neutral axis of bending. At this time, as illustrated in FIG. 2A, in the region C on the radial outside of the rim flange 5, bending deformation occurs in the direction of arrow C1, resulting in compressive deformation as indicated by arrow C2. Furthermore, in the region T on the tire radial outside of region C, bending deformation occurs in the direction of arrow T1, resulting in tensile deformation as indicated by arrow T2.

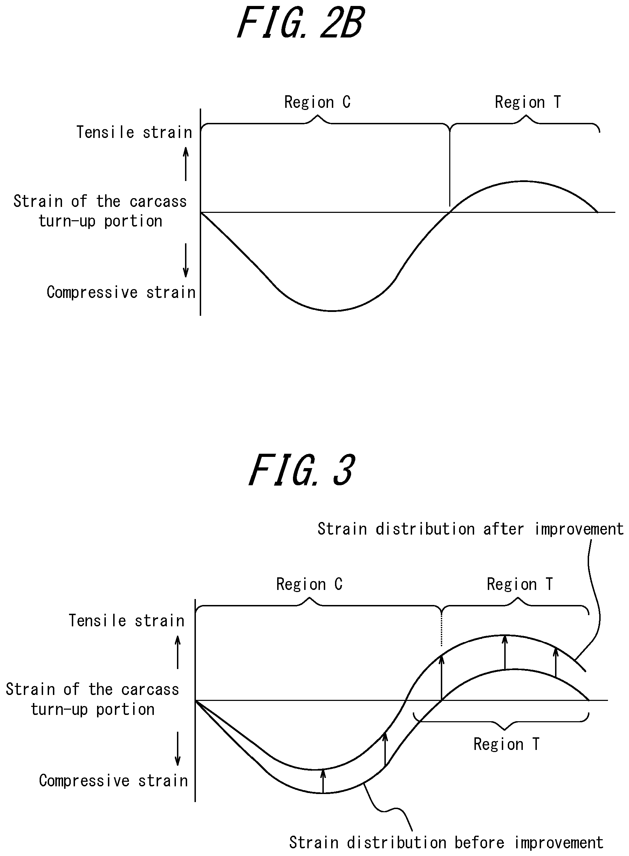

In this manner, during bending deformation of the tire, compressive deformation and tensile deformation occur in part of the bead portion and the sidewall portion, and compressive force and tensile force associated with these deformations act on the carcass turn-up portion 3 corresponding to each region. As a result, as illustrated in FIG. 2B, compressive strain and tensile strain occur in each region.

In contrast, by gradually decreasing the cord-to-cord distance between the carcass main body portion 2 and the carcass turn-up portion 3 to a minimum value, the compressive strain acting on the carcass turn-up portion 3 is reduced. This is because, by bringing the carcass turn-up portion 3 closer to the carcass main body portion 2, the carcass turn-up portion 3 approaches the neutral axis of bending, thereby alleviating the compressive action on the carcass turn-up portion 3 in that region. As a result, compressive strain in the carcass turn-up portion 3 can be suppressed, thereby suppressing fatigue fracture.

Furthermore, by gradually decreasing the cord-to-cord distance between the carcass main body portion 2 and the carcass turn-up portion 3, the distance between the carcass turn-up portion 3 and the outer surface increases, thereby reducing the shear strain generated between the carcass turn-up portion 3 and the outer surface in this region. As a result, separation between the carcass turn-up portion 3 and the rubber can be suppressed.

In addition, by gradually increasing the cord-to-cord distance between the carcass main body portion 2 and the carcass turn-up portion 3 from the minimum value toward the tire radial outside to reach a maximum value, the carcass turn-up portion in that region moves away from the neutral axis of bending, and the tensile force becomes stronger, thereby increasing the tensile strain. Therefore, as illustrated in FIG. 3, the region T increases, and the action of compressive force is reduced by the amount of this increase. As a result, since the compressive strain acting on the carcass turn-up portion 3 can be reduced, fatigue fracture of the carcass can be suppressed.

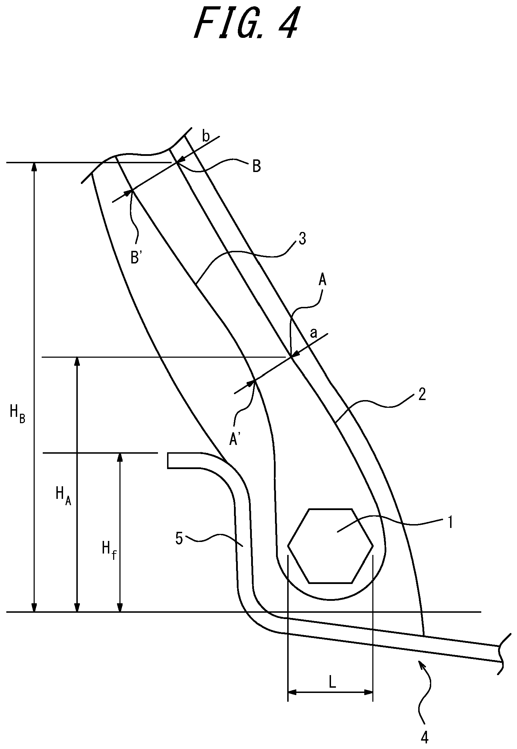

Here, as illustrated in FIG. 4, let the center point of the cord of the carcass main body portion 2 at the minimum value be A, and the center point of the cord of the carcass main body portion 2 at the maximum value be B. When the normal line dropped from A to the carcass turn-up portion 3 intersects the center point of the cord of the carcass turn-up portion 3 at A', and the normal line dropped from B to the carcass turn-up portion 3 intersects the center point of the cord of the carcass turn-up portion 3 at B', the cord-to-cord distance from A to A' is a, and the cord-to-cord distance from B to B' is b.

At this time, it is preferable that the minimum value a of the cord-to-cord distance is 0.18 to 0.40 times the maximum cross-sectional diameter of the bead core 1. That is, if it is less than 0.18 times the maximum cross-sectional diameter of the bead core 1, the bending rigidity of the bead portion is insufficient, and the amount of collapsing of the bead portion increases. As a result, the shear strain of the rubber existing between the carcass turn-up portion 3 and the carcass main body portion 2 increases. On the other hand, if it exceeds 0.40 times the maximum cross-sectional diameter of the bead core 1, the carcass turn-up portion 3 becomes too far from the carcass main body portion 2, and the compressive strain generated in the carcass turn-up portion 3 increases significantly. In addition, if the carcass turn-up portion 3 comes too close to the outer surface of the bead portion, the shear strain of the rubber between the outer surface of the bead portion and the carcass turn-up portion 3 increases, making it impossible to improve the durability of the bead portion.

Now, as illustrated in FIGS. 1 and 4, when the height from the rim baseline L to point A of the carcass main body portion 2 at the minimum value is H_{A}, the height from the rim baseline L to point B of the carcass main body portion 2 at the maximum value is H_{B}, and the height from the rim baseline L to the rim flange 5 is H_{f}, $1.26 \times {H}_{f} \leq {H}_{A} \leq 2.14 \times {H}_{f} ,$ and $2.43 \times {H}_{f} \leq {H}_{B} \leq 3.75 \times {H}_{f}$ are satisfied.

That is, if H_{A} is less than 1.26 × H_{f}, the change in the minimum value of the cord-to-cord distance from the bead core 1 becomes extremely large, and since a sharp curvature change is required to make the carcass turn-up portion 3 convex toward the carcass main body portion 2, tire manufacturing becomes difficult.

Furthermore, the bending rigidity of the bead portion near the lower end of the rim flange 5 decreases, and the amount of collapsing of the bead portion increases, so the increase in shear strain acting on the rubber between the carcass turn-up portion 3 and the carcass main body portion 2 becomes significant.

In addition, the increase in shear strain of the rubber along the carcass turn-up portion 3 becomes significant, leading to separation between the carcass turn-up portion 3 and the rubber on the carcass main body portion 2 side and the rim flange side, thereby reducing the life of the tire.

On the other hand, if H_{A} exceeds 2.14 × H_{f}, the position of the minimum value becomes too close to the tire radial outside with respect to the region where compressive strain acts on the carcass turn-up portion 3, so the compressive strain on the radial inside (bead core side) increases.

Furthermore, since the carcass turn-up portion 3 near the rim flange 5 becomes convex in the direction opposite to the carcass main body portion 2, the shear strain acting on the rubber between the outer surface of the bead portion and the carcass turn-up portion 3 increases, making it difficult to suppress the occurrence of separation between the carcass turn-up portion 3 and the rubber.

The height H_{A} is preferably set in a region where the compressive strain generated in the carcass turn-up portion 3 begins to increase significantly, so that the advantageous effects of the present embodiment can be further exhibited, and it is preferable that 1.4 × H_{f} ≤ H_{A} ≤ 1.9 × H_{f}.

Next, if H_{B} is less than 2.43 × H_{f}, the compressive strain acting on the carcass turn-up portion 3 at the position of the maximum value becomes strong, and the effect of applying tensile strain to the carcass turn-up portion 3 to reduce compressive strain decreases, making it difficult to suppress fatigue fracture of the carcass turn-up portion 3.

On the other hand, if H_{B} exceeds 3.75 × H_{f}, the maximum value becomes too far from the region where compressive force acts, so the effect of applying tensile strain to the carcass turn-up portion 3 to reduce compressive strain decreases, and fatigue fracture of the carcass turn-up portion 3 cannot be suppressed.

Furthermore, in the sidewall portion region near the end of the carcass turn-up portion 3, the tension applied to the carcass turn-up portion 3 increases, and this tension acts in the direction of pulling the end of the carcass turn-up portion 3 out from the bead core l. As a result, the shear strain of the rubber near the end of the carcass turn-up portion 3 increases, and cracks occur at the end of the carcass turn-up portion 3.

The height H_{B} is preferably set in a region where the tensile force acts strongly and the compressive force decreases, so that the compressive strain decreases significantly, and the advantageous effects of the present embodiment can be further exhibited. Therefore, it is preferable that 2.8 × H_{f} ≤ H_{B} ≤ 3.4 × H_{f}.

Furthermore, the ratio b/a of the maximum value b of the cord-to-cord distance to the minimum value a of the cord-to-cord distance is greater than 1.00. That is, if the ratio b/a is 1.00 or less, it becomes difficult to reduce compressive strain. This is because, in a configuration where the ratio b/a is 1.00 or less, the tensile force in the region T where tensile deformation occurs is not increased, so the effect of sufficiently reducing compressive strain is lost. As a result, suppression of fatigue fracture of the carcass turn-up portion 3 cannot be achieved.

Here, in order to avoid the occurrence of separation due to an increase in heat buildup or heat accumulation in the rubber between the carcass turn-up portion 3 and the carcass main body portion 2, especially due to thickening near the position of the maximum value as the overall thickness of the bead portion increases, it is preferable that the ratio is 1.40 or more and 4.00 or less.

Furthermore, in order to suppress fatigue fracture of the carcass turn-up portion 3 and an increase in heat buildup or heat accumulation in the rubber between the carcass turn-up portion 3 and the carcass main body portion 2 under heavy load environments or low internal pressure environments, it is preferable that the ratio is 2.00 or more and 3.00 or less.

Now, as a result of intensive studies by the present inventors to solve the above problems, it has been found that the occurrence of a portion with large curvature in the carcass turn-up portion 3 increases the buckling of the carcass turn-up portion 3, which is a cause of insufficient reduction of fatigue fracture of the carcass turn-up portion 3.

More specifically, when a portion with large curvature occurs in a tire radial region of a certain length, the carcass cord of the carcass turn-up portion 3 deforms in two directions, the tire circumferential direction and the radial direction, due to buckling (in-plane bending deformation and circumferential bending deformation). When the carcass cord deforms in the above two directions, the carcass cord deforms in a helical manner, and if this deformation repeatedly occurs, the carcass cord undergoes fatigue fracture. Particularly, when the carcass cord is a steel cord, it cannot contract against buckling, so this phenomenon becomes especially pronounced. Also, when the cord diameter of the carcass cord is small (specifically, when the diameter is 4.0 mm or less), the rigidity against buckling decreases, so this phenomenon becomes especially pronounced.

In contrast, in the tire 8 of the present embodiment, the maximum value of curvature of the carcass turn-up portion 3 in a tire radial region from a position separated by a distance of 2.0 × H_{f} to a position separated by a distance of 3.0 × H_{f} from the rim baseline toward the tire radial outside is 0.003 (1/mm) or less. As a result, buckling of the carcass turn-up portion 3 is less likely to occur, and the above-described helical deformation is suppressed, thereby suppressing the occurrence of fatigue fracture. That is, if the maximum value of curvature of the carcass turn-up portion 3 in the above tire radial region exceeds 0.003 (1/mm), buckling of the carcass turn-up portion 3 occurs, the above-described helical deformation occurs, and fatigue fracture is more likely to occur.

As described above, according to the pneumatic tire 8 of the present embodiment, by suppressing buckling of the carcass turn-up portion 3, fatigue fracture of the carcass turn-up portion 3 can be suppressed, thereby improving the durability of the bead portion.

For the same reasons as above, it is more preferable that the maximum value of curvature of the carcass turn-up portion 3 in a tire radial region from a position separated by a distance of 2.0 × H_{f} to a position separated by a distance of 3.0 × H_{f} from the rim baseline toward the tire radial outside is 0.0025 (1/mm) or less, and even more preferable that it is 0.0020 (1/mm) or less. On the other hand, in order to smoothly form the carcass line in the above tire radial region, it is preferable that the maximum value of curvature of the carcass turn-up portion 3 in the above tire radial region is 0.0001 (1/mm) or more.

A tire according to another embodiment of the present disclosure is such that, in a tire radial region from a position separated by a distance of 2.0 × H_{f} to a position separated by a distance of 3.0 × H_{f} from the baseline of the applicable rim toward the tire radial outside, the cord-to-cord distance between the carcass main body portion 2 and the carcass turn-up portion 3 is at least 0.25 times the maximum diameter of the bead core in a cross-section in the tire width direction, and the maximum value of curvature of the carcass turn-up portion 3 in the above tire radial region is 0.003 (1/mm) or less.

If the above cord-to-cord distance is less than 0.25 times the maximum diameter, the increase in shear strain acting on the rubber between the carcass turn-up portion 3 and the carcass main body portion 2 becomes significant, leading to the occurrence of separation.

If the maximum value of curvature of the carcass turn-up portion 3 in the above tire radial region exceeds 0.003 (1/mm), buckling of the carcass turn-up portion 3 occurs, the above-described helical deformation occurs, and fatigue fracture is more likely to occur.

As described above, even with the pneumatic tire 8 of another embodiment, by suppressing buckling of the carcass turn-up portion 3, fatigue fracture of the carcass turn-up portion 3 can be suppressed, thereby improving the durability of the bead portion.

In addition, from the viewpoint of weight reduction of the tire, it is preferable that the above cord-to-cord distance is 0.40 times or less the maximum diameter.

In each of the above embodiments, it is preferable that the curvature of the carcass turn-up portion 3 at a position separated by a distance of 2.0 × H_{f} from the rim baseline toward the tire radial outside is smaller than the curvature at a position separated by a distance of 3.0 × H_{f} from the rim baseline toward the tire radial outside. In the region C, where compressive force acts on the carcass turn-up portion 3 as illustrated in FIG. 1, the influence on fatigue fracture is greater than in the region T, where tensile force acts on the carcass turn-up portion 3. By making the curvature of the carcass turn-up portion 3 at a position separated by a distance of 2.0 × H_{f} from the rim baseline toward the tire radial outside particularly small, the effect of suppressing buckling of the carcass turn-up portion 3, thereby suppressing fatigue fracture of the carcass turn-up portion 3 and improving the durability of the bead portion, can be obtained more effectively.

In each of the above embodiments, it is preferable that, in the tire radial region from a position separated by a distance of 2.0 × H_{f} to a position separated by a distance of 3.0 × H_{f} from the baseline of the applicable rim toward the tire radial outside, the curvature of the carcass turn-up portion 3 gradually decreases from the tire radial outside toward the inside. As described above, the closer to region C, the greater the influence on fatigue fracture, so by gradually decreasing the curvature as described above, the effect of suppressing buckling of the carcass turn-up portion 3, thereby suppressing fatigue fracture of the carcass turn-up portion 3 and improving the durability of the bead portion, can be obtained more effectively. In addition, the carcass line can be formed smoothly.

In each of the above embodiments, it is preferable that the pneumatic tire is a heavy-duty tire, the end of the carcass turn-up portion 3 extends to a tire radial position of the sidewall portion, and the carcass cord is a steel cord. In the case of a heavy-duty tire, the problem of fatigue fracture of the carcass turn-up portion 3 tends to become pronounced due to severe usage conditions, and when the end of the carcass turn-up portion 3 extends to a tire radial position of the sidewall portion, it is more susceptible to the above compressive and tensile forces. Furthermore, when the carcass cord is a steel cord, as described above, it cannot contract against buckling, so the problem of fatigue fracture of the carcass turn-up portion 3 becomes pronounced, and in such cases, the above embodiments can be suitably applied. The end of the carcass turn-up portion 3 preferably terminates at a position on the tire radial outside of the tire maximum width position, for example.

In addition, in each of the above embodiments, it is particularly preferable that the cord diameter of the carcass cord is 4.0 mm or less. Since the rigidity against buckling of the carcass cord decreases, the problem of fatigue fracture of the carcass turn-up portion 3 becomes pronounced, and in such cases, the above embodiments can be suitably applied.

Hereinafter, examples of the present disclosure will be described, but the present disclosure is not limited in any way to the following examples.

### EXAMPLES

### (Example Group 1)

### (Example 1)

A pneumatic radial tire for construction vehicles having a tire size of 59/80R63 was assembled onto a rim having a width of 1117.6 mm and a flange height H_{f} of 127 mm, the internal pressure was adjusted to 600 kPa, and a regular load of 996.4 kN was applied. Then, by moving the tire laterally on the road surface, a lateral force of 149.5 kN was applied, and the buckling amplitude at the location where the buckling of the carcass turn-up portion of the carcass ply was greatest was measured. The tire structure was such that the carcass, serving as the framework, included a carcass main body portion formed of a carcass ply in which a plurality of carcass cords, extending in a toroidal manner between a pair of bead cores, are rubber-coated, and a carcass turn-up portion formed of the carcass ply, which is turned up from the carcass main body portion around each bead core from the inside to the outside of the tire and extends to the tire radial outside. The cord-to-cord distance between the carcass main body portion and the carcass turn-up portion was configured to gradually decrease from the bead core toward the tire radial outside, reach a minimum value, then gradually increase to reach a maximum value.

Additionally, the compressive force acting on the carcass turn-up portion of the carcass ply was calculated by FEM analysis under simulation conditions corresponding to the above actual measurement conditions.

### (Comparative Example 1)

The point of difference from Example 1 is that the carcass turn-up portion does not have a maximum value in the cord-to-cord distance.

### (Comparative Example 2)

The point of difference from Example 1 is that the maximum value of curvature of the carcass turn-up portion is different.

The specifications and evaluation results of each tire are presented in Table 1 below. Note that the compressive strain and buckling amount are expressed as indices with Comparative Example 1 set to 100, and a smaller value indicates better performance.

The buckling amount of the carcass ply in Example 1, Comparative Example 1, and Comparative Example 2 was actually measured. The compressive strain of the carcass ply in Example 1, Comparative Example 1, and Comparative Example 2 was calculated by FEM analysis.

| | Example 1 | Comparative Example 1 | Comparative Example 2 |
|---|---|---|---|
| Curvature (position of 2.0 × Hf) (1/mm) | 0.0004 | 0.0007 | 0.0001 |
| Curvature (position of 3.0 × Hf) (1/mm) | 0.0017 | 0.0019 | 0.0039 |
| Maximum value of curvature (within region of 2.0-3.0 × Hf) (1/mm) | 0.0017 | 0.0021 | 0.0039 |
| Position of maximum value HA (mm) | 1.73 | 1.6 | 1.73 |
| Position of minimum value HB (mm) | 3.31 | - | 3.03 |
| Ratio b/a | 1.07 | 1 | 1.17 |
| Minimum cord-to-cord distance a (mm) | 30 | 20 | 30 |
| Carcass ply compressive strain (FEM) | 81 | 100 | 79 |
| Carcass ply buckling amount (actual measurement) | 72 | 100 | 144 |

As indicated in Table 1, the Exemple exhibited a reduced bucking amount of the carcass ply compared to Comparative Examples 1 and 2. Furthermore, the Example Exhibited a reduced compressive stain of the carcass ply compared to Comparative Example 1.

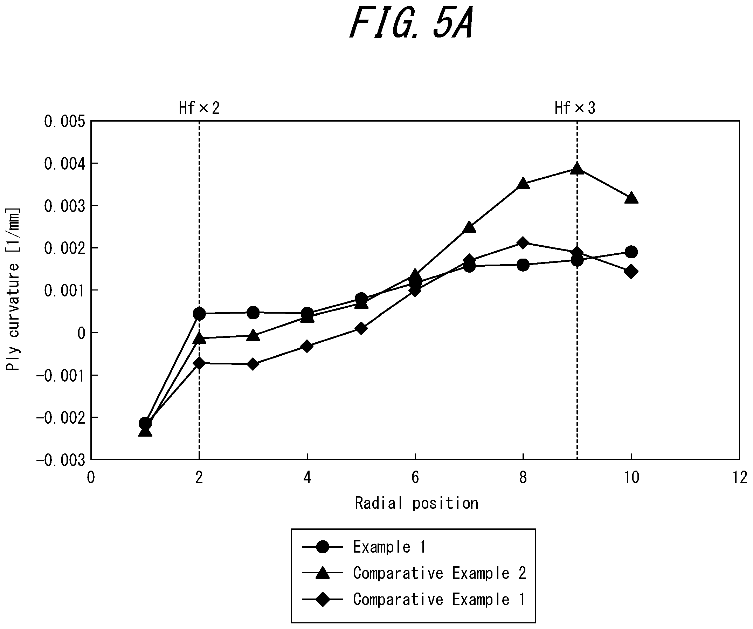

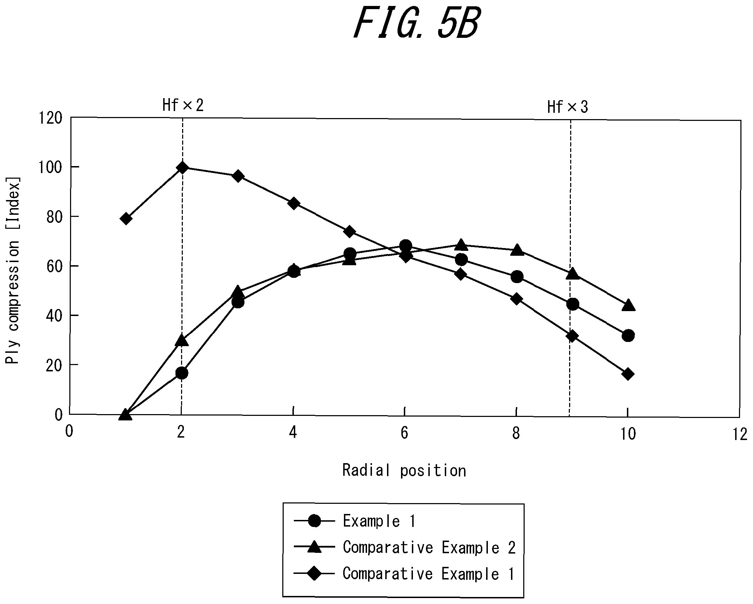

FIGS. 5A and 5B are diagrams each illustrating the distribution of curvature and compressive strain in the tire radial direction of the carcass turn-up portion, respectively. From Table 1, FIG. 5A, and FIG. 5B, it can be understood that, in order to reduce the buckling amount, it is necessary to reduce both the curvature and the compressive strain of the carcass turn-up portion in the radial region of 2.0 × H_{f} to 3.0 × H_{f}.

### [Contribution to the Sustainable Development Goals (SDGs) Led by the United Nations]

SDGs have been advocated for the realization of a sustainable society. One embodiment of the present disclosure is considered to be a technology that can contribute to, for example, "No. 12: Responsible Consumption and Production" and "No. 13: Climate Action."

### REFERENCE SIGNS LIST

1: bead core,
2: carcass main body portion,
3: carcass turn-up portion,
4: applicable rim,
5: rim flange,
6: belt,
7: tread portion,
8: pneumatic tire

## Claims

1. A pneumatic tire having a carcass as a framework, the carcass comprising: a carcass main body portion formed of a carcass ply in which a plurality of carcass cords, extending in a toroidal manner between a pair of bead cores, are rubber-coated; and a carcass turn-up portion formed of the carcass ply, which is turned up from the carcass main body portion around each bead core from the inside to the outside of the tire and extends to the tire radial outside, wherein, in a cross-sectional view in the tire width direction when the pneumatic tire is mounted on an applicable rim, a cord-to-cord distance between the carcass main body portion and the carcass turn-up portion gradually decreases from the bead core toward the tire radial outside to reach a minimum value, then gradually increases to reach a maximum value, and tire radial heights H_{A} and H_{B}, measured from a baseline of the applicable rim to points of the carcass main body portion where the minimum value and the maximum value occur, and a flange height H_{f} of the applicable rim, satisfy the following: $1.26 \times {H}_{f} \leq {H}_{A} \leq 2.14 \times {H}_{f} ,$ and $2.43 \times {H}_{f} \leq {H}_{B} \leq 3.75 \times {H}_{f} ,$ and a ratio b/a of a maximum value b of the cord-to-cord distance to a minimum value a of the cord-to-cord distance is greater than 1.00, and a maximum value of curvature of the carcass turn-up portion in a tire radial region from a position separated by a distance of 2.0 × H_{f} to a position separated by a distance of 3.0 × H_{f} from the baseline toward the tire radial outside is 0.003 (1/mm) or less.

2. A pneumatic tire having a carcass as a framework, the carcass comprising: a carcass main body portion formed of a carcass ply in which a plurality of carcass cords, extending in a toroidal manner between a pair of bead cores, are rubber-coated; and a carcass turn-up portion formed of the carcass ply, which is turned up from the carcass main body portion around each bead core from the inside to the outside of the tire and extends to the tire radial outside, wherein, in a cross-sectional view in the tire width direction when the pneumatic tire is mounted on an applicable rim, when a flange height of the applicable rim is H_{f}, a cord-to-cord distance between the carcass main body portion and the carcass turn-up portion in a tire radial region from a position separated by a distance of 2.0 × H_{f} to a position separated by a distance of 3.0 × H_{f} from the baseline of the applicable rim toward the tire radial outside is at least 0.25 times a maximum diameter of the bead core in a cross-section in the tire width direction, and a maximum value of curvature of the carcass turn-up portion in the tire radial region is 0.003 (1/mm) or less.

3. The pneumatic tire according to claim 1 or 2, wherein a curvature at a position separated by a distance of 2.0 × H_{f} from the baseline toward the tire radial outside is smaller than a curvature at a position separated by a distance of 3.0 × H_{f} from the baseline toward the tire radial outside.

4. The pneumatic tire according to any one of claims 1 to 3, wherein, in the tire radial region, the curvature gradually decreases from the tire radial outside toward the inside.

5. The pneumatic tire according to any one of claims 1 to 4, wherein the pneumatic tire is a heavy-duty tire, an end of the carcass turn-up portion extends to a tire radial position of a sidewall portion, and the carcass cord is a steel cord.
